# EUROPÄISCHE PATENTSCHRIFT

(11) **EP 1 857 895 B1**
(45) Veröffentlichungstag und Bekanntmachung des Hinweises auf die Patenterteilung: **09.12.2009**
(21) Anmeldenummer: 07009097.2
(22) Anmeldetag: 05.05.2007
(51) Int. Cl.: G05B 15/02, B60G 17/00, F16F 9/46, G05B 19/05, G05B 19/042

(54) **Verfahren zum Betrieb eines Aktuator**
Method for operating an actuator
Procédé pour le fonctionnement d'un actuateur

(30) Priorität: 16.05.2006 DE 102006022790
(43) Veröffentlichungstag der Anmeldung: 21.11.2007
(73) Patentinhaber: ZF Friedrichshafen AG, 88046 Friedrichshafen (DE)
(72) Erfinder: Albert, Bernd, 97478 Knetzgau (DE); Rappelt, Stefan, 97447 Gerolzhofen (DE)

(56) Entgegenhaltungen:
- WO-A-2004/076143
- WO-A-2005/085965
- DE-A1- 19 950 177
- DE-A1-102004 063 777

## Beschreibung

Die Erfindung betrifft ein Verfahren zum Betrieb einer steuerbaren Baugruppe gemäß dem Oberbegriff von Patentanspruch 1.

Komplexe Vorrichtungen bestehen aus einer Vielzahl von Baugruppen, deren Funktion allein durch die Herstellung toleranzbehaftet ist. Deshalb geht man den Weg, dass die Baugruppe entweder extrem präzise gefertigt wird oder am Ende der Montage justierbar ist, damit Signale von einem Steuergerät von der Baugruppe optimal umgesetzt werden können.

Bei einem verstellbaren Schwingungsdämpfer tritt das beschriebene Problem auch auf. Wenn ein Fahrzeug mit verstellbaren Schwingungsdämpfern ausgestattet ist, dann weichen streng genommen alle eingebauten Aggregate voneinander ab. Zwar wird in der DE 197 22 216 A1 beschrieben, wie man einen verstellbaren Schwingungsdämpfer justieren kann, um eine gewünschte Dämpfkraftkennlinie zu erhalten, doch sind die Eingriffsmöglichkeiten begrenzt. Vor allem verteuert eine Justierung des Schwingungsdämpfers die Fertigung.

In der DE 199 50 177 A1 wird ein Schwingungsdämpfer mit veränderbarer Dämpfkraft beschrieben, bei dem die zum Steuern des Schwingungsdämpfers notwendigen Bauteile bereits integriert sind, so dass von einem zentralen Steuergerät nur noch übergeordnete Signale kommen, jedoch die dem einzelnen Schwingungsdämpfer zuordbaren Signale direkt im Schwingungsdämpfer berechnet und verarbeitet werden. Bei einem derartigen Schwingungsdämpfer sind die Toleranzschwankungen nicht störend, da diese durch die geschlossene Bauweise Schwingungsdämpfer + Regler kompensiert werden.

Die WO 2004/076143 A, beschreibt eine Kunststoffverarbeitungsmaschine, deren Arbeitsbereich durch den Einsatz von verschiedenen Komponenten, z. B. Schnecken und Zylinder, sehr variabel gehalten werden kann. Zur Identifikation der technischen Merkmale einer Komponente werden charakterisierende Signale einer Speichereinrichtung der Maschinensteuerung zugeführt. Anhand der erkannten technischen Merkmale kann die Kunststoffverarbeitungsmaschine mit einer standardisierten Programmsteuerung betrieben werden.

In der DE 10 2004 063777 ist ein Feldmessgerät offenbart, bei dessen Herstellung charakterisierende Eigenschaften gespeichert und über ein Typenschild dokumentiert sind und angezeigt werden. Die Eigenschaften können in einer Speichereinheit abgelegt werden.

Die Aufgabe der vorliegenden Erfindung besteht darin, sicherzustellen, dass eine steuerbare Baugruppe mit einem externen Steuergerät möglichst präzise funktioniert.

Erfindungsgemäß wird die Aufgabe durch die Merkmale des Patentanspruchs 1 gelöst.

Der große Vorteil besteht darin, dass die Kombination einer abweichenden Kennlinie mit einem bestimmungsgemäßen Steuergerät trotzdem zu der gewünschten Funktion führt. Es ist nicht mehr notwendig, alle Bauteile, die die Kennlinie der verstellbaren Baugruppe bestimmen, justierbar auszuführen. Insbesondere wenn das Steuergerät mehrere prinzipiell gleichartige verstellbare Baugruppe ansteuern soll, kann es sinnvoll sein, ein einziges Steuersignal abzusetzen, das bei allen verstellbaren Baugruppen zu einem identischen Betriebsverhalten führt. Anhand der folgenden Figurenbeschreibung soll die Erfindung näher erläutert werden.

In weiterer Ausgestaltung des Verfahrens ist vorgesehen, dass im Fertigungsablauf der verstellbaren Baugruppe die für das Steuergerät relevanten Informationen aufgenommen und gespeichert werden. Z. B. am Ende der Montage durchläuft die verstellbare Baugruppe ein Testprogramm zur Funktionsüberprüfung. Diese Messergebnisse werden gespeichert.

Eine Möglichkeit besteht darin, dass die Informationen auf einem mit dem verstellbaren Bauteil zugeordneten Bar-Code gespeichert werden.

Alternativ kann die Informationen auch auf einem dem verstellbaren Bauteil zugeordneten Transponder gespeichert werden. Diese Variante bietet insbesondere bei der Übertragung der Information in das Speichergerät erhebliche Vorteile, da keine Handarbeit notwendig ist, um die Information in das Speichergerät zu übertragen.

Eine weitere Möglichkeit besteht darin, dass dem verstellbaren Bauteil eine eindeutige Identifikation zugeordnet wird und über diese Identifikation die Informationen dem Steuergerät zugeführt werden. Konkret könnte jedem verstellbaren Bauteil eine Produktions-Nr. zugeordnet werden, unter der alle Informationen abgespeichert werden. Mit der Lieferung der Bauteile kann z. B. eine CD verbunden sein, auf der dem Kunden die Informationen zur Verfügung gestellt werden, die sich dann in das Steuergerät einlesen lassen.

Es zeigt:
- Fig. 1: Kfz mit verstellbaren Schwingungsdämpfer
- Fig. 2: Prinzipieller Aufbau des Steuergeräts

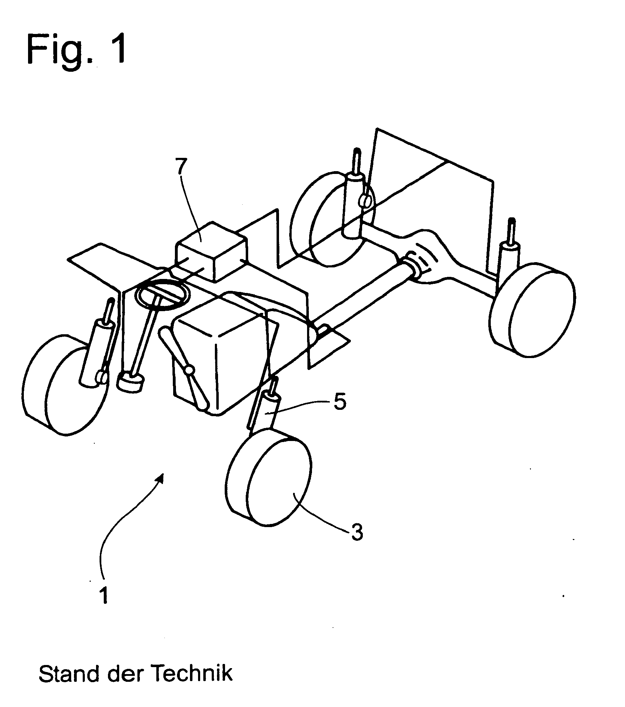

Die Fig. 1 zeigt ein aus dem Stand der Technik bekanntes sehr einfaches Prinzipschaubild eines schwingungsfähigen Systems in der Bauform eines Kraftfahrzeugfahrwerks 1, das an jedem Rad 3 eine verstellbare Baugruppe als Schwingungsdämpfer 5, dessen Dämpfkraft veränderbar ist. Ein zentrales Steuergerät 7 übernimmt die Auswertung von Sensorsignalen einer nicht dargestellten Sensorik und sendet Stellsignale an die Schwingungsdämpfer 5, um deren Dämpfkraftkennlinie zu bestimmen. Ein schwingungsfähiges System kann auch von einer Kabine auf einem Fahrzeugrahmen eines Nutzfahrzeuges oder einer Trommel innerhalb einer Waschmaschine gebildet werden. Die Aufzählungen sind nur beispielhaft zu werten. Eine Vielzahl weiterer Anwendungen ist denkbar. Der Begriff Steuergerät soll auch den Begriff Regelgerät einschließen.

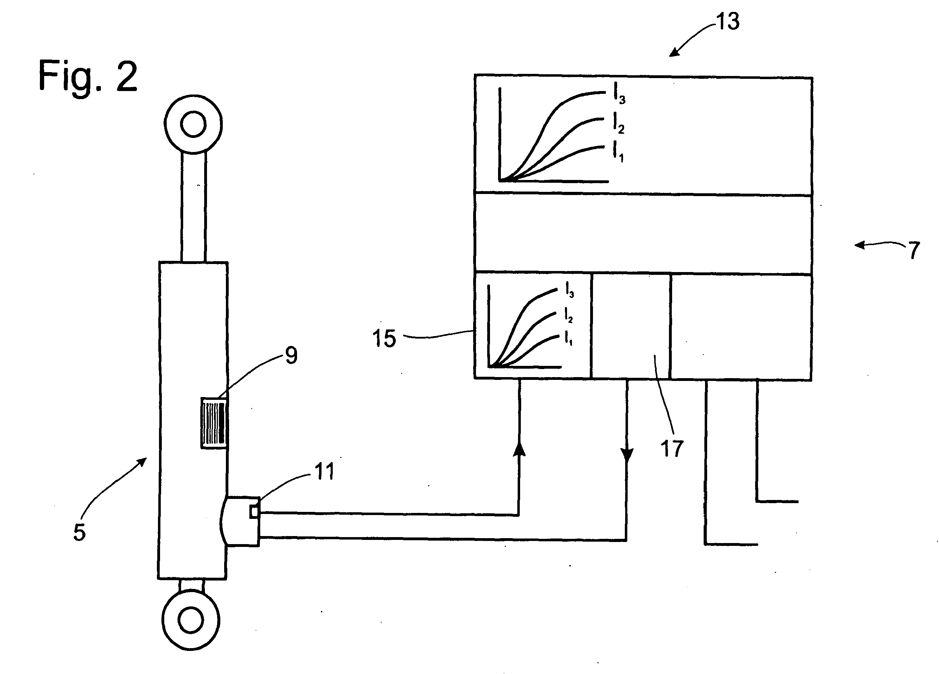

Die Fig. 2 beschränkt sich auf die Darstellung eines einzigen verstellbaren Schwingungsdämpfers 5 mit dem Steuergerät 7. Bei dem verstellbaren Schwingungsdämpfer kann es sich z. B. um eine Konstruktion handeln, wie sie bereits aus der zitierten DE 197 22 216 A1 bekannt ist, deren Inhalt einen Teil dieser Beschreibung darstellen soll. Bei der Produktion des verstellbaren Schwingungsdämpfers 5 wird das Dämpfkraftkennlinienfeld ermittelt. Die gespeicherten Daten sind z. B. in einem Bar-Code 9 oder einem Transponder 11 enthalten und begleiten den verstellbaren Schwingungsdämpfer vom Montageband bis zum Fahrzeug. Alternativ kann dem Schwingungsdämpfer auch eine individuelle Identifikation zugeordnet werden, über die Informationen 15 während des Fertigungsablaufs aufgenommen und abgespeichert werden. Diese gespeicherten Daten werden zusammen mit dem Schwingungsdämpfer zur Verfügung gestellt und können dem Steuergerät zugeführt werden.

Am Fahrzeug werden die Dämpfkraftkennliniendaten in das Steuergerät 7 eingespeist. In dem Steuergerät ist für den Betrieb der Schwingungsdämpfer 5 ein definiertes Dämpfkraftkennlinienfeld 13 abgespeichert, so dass etwaige Abweichungen zwischen dem definierten Dämpfkraftkennfeld und dem tatsächlich vorhandenen Dämpfkraftkennlinienfeld 15 des montierten Schwingungsdämpfers festgestellt und gespeichert werden können. Des Weiteren umfasst das Steuergerät ein Korrekturmodul 17, mit dem die Abweichungen kompensiert werden, um mit einem einzigen genormten Steuersignal gleichzeitig mehrere verstellbare Schwingungsdämpfer anzusteuern, die u. U. verschiedene tatsächliche Dämpfkraftkennlinienfelder aufweisen.

## Patentansprüche

1. Verfahren zum Betrieb einer verstellbaren Baugruppe (5), die mit einem Steuergerät (7) verbunden ist wobei ein vom Steuergerät (7) ausgehende Signal mindestens einer Kennlinie folgend eine Betriebsfunktion bei der verstellbaren Baugruppe (5) bewirkt und von der verstellbaren Baugruppe (5) Informationen bezüglich der Kennlinie (15) der Baugruppe (5) in das Steuergerät (7) eingespeist werden,
**dadurch gekennzeichnet,**
**dass** eine Abweichung der Kennlinie (15) der Baugruppe (5) zu einer definierten Kennlinie (13) von dem Steuergerät (7) erkannt und gespeichert wird, und über ein Korrekturmodul (17) ein Steuersignal des Steuergeräts (7) an die verstellbare Baugruppe (5) angepasst wird.

2. Verfahren nach Anspruch 1,
**dadurch gekennzeichnet,**
**dass** im Fertigungsablauf der verstellbaren Baugruppe (5) die für das Steuergerät (7) relevanten Informationen (15) aufgenommen und gespeichert werden.

3. Verfahren nach Anspruch 2,
**dadurch gekennzeichnet,**
**dass** die Informationen (15) auf einem mit dem verstellbaren Bauteil (5) zugeordneten Bar-Code (9) gespeichert werden.

4. Verfahren nach Anspruch 2,
**dadurch gekennzeichnet,**
**dass** die Informationen (15) auf einem dem verstellbaren Bauteil (5) zugeordneten Transponder (11) gespeichert werden.

5. Verfahren nach Anspruch 2,
**dadurch gekennzeichnet,**
**dass** dem verstellbaren Bauteil eine eindeutige Identifikation zugeordnet wird und über diese Identifikation die Informationen (15) dem Steuergerät (7) zugeführt werden.

## Claims

1. Method for operating an adjustable assembly (5) which is connected to a control device (7), wherein a signal which originates from the control device (7) brings about an operating function at the adjustable assembly (5) by following at least one characteristic curve, and information relating to the characteristic curve (15) of the assembly (5) is fed into the control device (7) by the adjustable assembly (5),
**characterized**
**in that** a deviation of the characteristic curve (15) of the assembly (5) with respect to a defined characteristic curve (13) is detected and stored by the control device (7), and a control signal of the control device (7) is adapted to the adjustable assembly (5) by means of a correction module (17).

2. Method according to Claim 1,
**characterized**
**in that** in the fabrication sequence of the adjustable assembly (5) the information (15) which is relevant to the control device (7) is recorded and stored.

3. Method according to Claim 2,
**characterized**
**in that** the information (15) is stored on a bar code (9) which is assigned to the adjustable component (5).

4. Method according to Claim 2,
**characterized**
**in that** the information (15) is stored on a transponder (11) which is assigned to the adjustable component (5).

5. Method according to Claim 2,
**characterized**
**in that** an unambiguous identification is assigned to the adjustable component, and the information (15) is supplied to the control device (7) by means of this identification.

## Revendications

1. Procédé de conduite d'un module ajustable (5) relié à un appareil de commande (7),
un signal provenant de l'appareil de commande (7) ayant pour effet d'activer une fonction de conduite du module ajustable (5) en suivant au moins une ligne caractéristique,
des informations concernant la ligne caractéristique (15) du module (5) étant conservées dans l'appareil de commande (7) par le module ajustable (5),
**caractérisé en ce que**
un écart de la ligne caractéristique (15) du module (5) par rapport à une ligne caractéristique (13) définie est détecté et conservé dans l'appareil de commande (7) et
**en ce qu'**un signal de commande de l'appareil de commande (7) est adapté au module ajustable (5) par l'intermédiaire d'un module de correction (17).

2. Procédé selon la revendication 1, **caractérisé en ce que** les informations (15) pertinentes pour l'appareil de commande (7) sont enregistrées et conservées dans le groupe ajustable (5) au cours de sa fabrication.

3. Procédé selon la revendication 2, **caractérisé en ce que** les informations (15) sont conservées sur un code à barres (9) associé au composant ajustable (5).

4. Procédé selon la revendication 2, **caractérisé en ce que** les informations (15) sont conservées sur un transpondeur (11) associé au composant ajustable (5).

5. Procédé selon la revendication 2, **caractérisé en ce qu'**une identification univoque est associée au composant ajustable et ne ce que les informations (15) sont apportées à l'appareil de commande (7) par l'intermédiaire de cette identification.
